(19) Europäisches Patentamt
European Patent Office
Office européen des brevets

(11) **EP 4 317 912 A1**

(12) **EUROPEAN PATENT APPLICATION**
published in accordance with Art. 153(4) EPC

(43) Date of publication:
**07.02.2024 Bulletin 2024/06**

(21) Application number: **22779383.3**

(22) Date of filing: **17.01.2022**

(51) International Patent Classification (IPC):
***G01B 11/25*** *(2006.01)*

(52) Cooperative Patent Classification (CPC):
**G01B 11/25**

(86) International application number:
**PCT/JP2022/001389**

(87) International publication number:
**WO 2022/209151 (06.10.2022 Gazette 2022/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.03.2021 JP 2021056528**

(71) Applicant: **DENSO WAVE INCORPORATED**
**Agui-cho**
**Chita-gun, Aichi 470-2297 (JP)**

(72) Inventor: **MITANI, Yusuke**
**Chita-gun, Aichi 470-2297 (JP)**

(74) Representative: **Kuhnen & Wacker**
**Patent- und Rechtsanwaltsbüro PartG mbB**
**Prinz-Ludwig-Straße 40A**
**85354 Freising (DE)**

(54) **THREE-DIMENSIONAL MEASUREMENT DEVICE**

(57) To provide a configuration that enables measurement of a three-dimensional shape of an object to be measured using an event data. The projection unit 20 projects a predetermined stripe pattern to the measurement object R so that the emission start timing differs for each stripe number. The imaging unit 30 is equipped with an imaging device that outputs the event data including a two-dimensional point data in which a position of the pixel is specified corresponding to the pixel whose brightness has changed when it is received. An imaged image is generated from the event data output from the imaging device. The imaging device outputs the event data of the positive brightness change in a case of the brightness change to brighten and the event data of the negative brightness change in a case of the brightness change to darken. The measuring unit 40 obtains the stripe pattern information based on the time difference between the output of the event data of the positive brightness change and the output of the event data of the negative brightness change on a pixel-by-pixel basis in the captured image and the stripe number specified from the output timing of the first event data constituting this time difference.

FIG.3

EP 4 317 912 A1

**Description**

Cross-referencing related applications

The present application is based on Patent Application No. 2021 -56528, filed in Japan on March 30, 2021. This application invokes by reference, throughout, the contents of the underlying application.

Technical field

This disclosure relates to a three-dimensional measuring device for measuring a three-dimensional shape of an object to be measured.

Background

Conventionally, as a three-dimensional measuring device for measuring a three-dimensional shape of an object to be measured, for example, a device using a phase shift method has been known. The phase shift method is a method of projecting multiple striped pattern images with phase shifts. It is a method to perform a three-dimensional measurement on a measurement object projected with this stripe pattern image. As a technique for performing the three-dimensional measurement using the phase shift method in this way, the three-dimensional measurement device disclosed in Patent Document 1 below has been known. The three-dimensional measuring device assigns each phase of fringe to a different wavelength of light, and projects a composite stripe pattern image onto the object to be measured. The object of measurement projecting this stripe pattern image is photographed by a color camera. Each color component is extracted from the captured image and the phase is calculated in one shot. This reduces the time required to measure the three-dimensional shapes.

Related documents

Patent document

    Patent Bulletin 1: Japanese patent No. 3723057
    Patent Bulletin 2: U.S. Patent Application Publication No. 2016/0227135

Summary of the invention

An event camera disclosed in the above patent document 2 is known as a technology for generating images of objects to be measured at a higher speed. The event camera is a brightness value differential output camera developed by taking a hint from the retinal structure of living organisms. The event camera senses the brightness change for each pixel and outputs its coordinates, time, and polarity of the brightness change. With such a configuration, the event camera has such a characteristic that it does not output pixel information with no brightness change, that is, redundant data (event data), unlike conventional cameras. Therefore, by reducing the amount of data communication and reducing the weight of image processing, images of objects to be measured can be generated at a higher speed.

In the captured image of the object to be measured, which is generated using the event data output from the event camera, the presence or absence of the brightness change on a pixel-by-pixel basis can be grasped from the captured image. However, the brightness value cannot be measured directly from the captured image. For this reason, there is a problem that three-dimensional measurement methods such as the phase shift method using luminance values cannot measure the three-dimensional shape of the object to be measured.

This disclosure has been made in order to resolve the aforementioned issues. The purpose is to provide a configuration that enables measurement of the three-dimensional shape of the object to be measured using the event data.

To achieve the above purpose, claim 1 of the claims is a three-dimensional measuring device (10) having following configurations;

    a projection unit (20) that projects a predetermined stripe pattern on an object (R) to be measured,
    an imaging unit (30) that images the measuring object on which the predetermined stripe pattern is projected, and
    a measuring unit (40) that measures a three-dimensional shape of the measuring object by a phase shift method using a brightness information obtained from a captured image of the imaging unit, wherein
    the projection unit projects the predetermined stripe pattern by varying a time from either a light-emission start timing or a light-off start timing to either a light-emission end or a light-off end,

the imaging unit is equipped with an imaging device that outputs an event data including a two-dimensional point data in which a position of a pixel is specified corresponding to the pixel whose brightness has changed when it is received so that a captured image is generated from the event data output from the imaging device,

the imaging device is configured to output the event data of a positive brightness change in a case of the brightness change to brighten and the event data of a negative brightness change in a case of the brightness change to darken, and

the measurement unit obtains the stripe pattern information based on a time difference between the output of one of the event data and the output of the other of the positive brightness change and the negative brightness change in each pixel in the captured image.

Claim 2 is a three-dimensional measuring device (10) having following configurations;

a projection unit (20) that projects a predetermined stripe pattern on an object (R) to be measured,

an imaging unit (30) that images the measuring object on which the predetermined stripe pattern is projected, and

a measuring unit (40) that measures a three-dimensional shape of the measuring object by a phase shift method using a stripe pattern information obtained from a captured image of the imaging unit; wherein

the projection unit projects the predetermined stripe pattern so that a time from either a start of emission or a start of lights-out, which is a timing of measurement start, to either the start of emission or the start of lights-out, which is the timing of measurement end, is different;

the imaging unit is equipped with an imaging device that outputs an event data including a two-dimensional point data in which a position of a pixel is specified corresponding to the pixel whose brightness has changed when it is received so that a captured image is generated from the event data output from the imaging device;

the imaging device is configured to output at least one of the event data of a positive brightness change in a case of the brightness change becoming brighter and the event data of a negative brightness change in a case of the brightness change becoming darker; and

the measurement unit obtains the stripe pattern information based on a time difference between an output of the event data of either the positive brightness change or the negative brightness change, which is the timing of measurement start on a pixel-by-pixel basis, and the output of the event data of either the positive brightness change or the negative brightness change, which is the timing of measurement end, in the captured image.

Claim 3 is a three-dimensional measuring device (10) having following configurations;

a projection unit (20) that projects a predetermined stripe pattern on an object (R) to be measured,

an imaging unit (30) that images the measuring object on which the predetermined stripe pattern is projected; and

a measuring unit (40) that measures a three-dimensional shape of the measuring object by a phase shift method using a stripe pattern information obtained from the captured image of the imaging unit; wherein

the projection unit projects the predetermined stripe pattern using short pulse emission,

the imaging unit is equipped with an imaging device that outputs event data including a two-dimensional point data in which a position of a pixel is specified corresponding to the pixel whose brightness has changed when it is received so that the captured image is generated from the event data output from the imaging device, and

the measurement unit obtains the stripe pattern information on the basis of a number of outputs per unit time of the event data per pixel in the captured image.

The numerals in parentheses above indicate the correspondence with the specific means described in the later described embodiments.

Effect of the invention

In claim 1, the projection unit projects the predetermined stripe pattern onto the object to be measured by varying the time from either the start of emission or the start of extinguishment to either the end of emission or the end of extinguishment. The imaging unit is equipped with the imaging device that outputs the event data including the two-dimensional point data in which the position of the pixel is identified corresponding to the pixel whose brightness has been changed when it is received. The imaged image is generated from the event data output from the imaging device. The imaging device is configured to output the event data of the positive brightness change in the case of brightness change to brighten and the event data of the negative brightness change in the case of brightness change to darken. Then, the measuring unit obtains the stripe pattern information based on the time difference between the output of the event data of the positive brightness change and the output of the event data of the negative brightness change on a pixel-by-pixel basis in the captured image.

In the projection unit, in order to project the predetermined stripe pattern to be used in the phase shift method, the time of light emission or lighting-out is individually adjusted for each pixel. In the imaging unit, for each pixel unit in the captured image, when the brightness change that brightens by receiving light occurs, the event data of the positive brightness change is output. When the brightness change occurs that darkens as the light disappears, the event data of the negative brightness change is output. That is, the stripe pattern at the pixel can be obtained according to the time difference between the output of the event data of the positive brightness change and the output of the event data of the negative brightness change.

When there are multiple stripe patterns, the predetermined stripe pattern may be projected so that the light-emission start timing or the light-off start timing differs for each stripe number. In this case, the stripe number of the stripe pattern to which the pixel whose value of the stripe pattern is obtained belongs can be specified from the output timing of the first event data constituting the time difference. It is also not necessary to separately project multiple types of a gray code patterns to identify the stripe number to which the pixel whose stripe pattern value is obtained belongs. Therefore, the projection time of the gray code pattern, which is an impediment to the acceleration, can be reduced. Therefore, the three-dimensional shape of the object to be measured can be measured using the event data without projecting the gray code pattern to identify the stripe number. It is also possible to identify the stripe number by aligning the timing for each stripe number with the end timing instead of the start timing of the emission (or the turning off).

The measuring unit of claim 1 seeks the stripe pattern information based on the time difference between the output of the event data of the positive or the negative brightness change and the output of the event data of the negative or the positive brightness change on a pixel-by-pixel basis in the captured image. On the other hand, the measuring unit of claim 2 obtains the stripe pattern information based on the time difference between the output of event data of either the positive brightness change or the negative brightness change, which is the timing of measurement start on a pixel-by-pixel basis, and the output of the event data of either the positive brightness change or the negative brightness change, which is the timing of the measurement end, in the captured image. They all share the same idea of finding the stripe patterns by the time difference. In claim 1, the light is continuously turned on or off from the timing of measurement start to the timing of measurement end. On the other hand, claim 2 states that the light is turned on or off only at the timing of the measurement start and the timing of the measurement end.

The projection unit of claim 3 projects the predetermined stripe pattern to the measuring object by using the short pulse of at least either the light emission or the lights-out. The imaging unit is equipped with the imaging device that outputs the event data including the two-dimensional point data in which the position of the pixel is identified corresponding to the pixel whose brightness has been changed when it is received. The imaged image is generated from the event data output from the imaging device. The measuring unit obtains the information on the stripe pattern based on the number of times the event data is output per the pixel in the captured image.

For the purpose of reducing power consumption, etc., the projection unit can realize the light emission and the off state in the pixel units by the short pulses, respectively. In each pixel of the imaging device, the event data of the positive brightness change and the event data of the negative brightness change are output in response to one short pulse. Therefore, it is possible to obtain the value of the stripe pattern of the emission state based on the number of times of emission or extinguishment of the short-pulse emission, that is, the number of times of output of the event data. Thus, the stripe pattern can be identified.

When there are multiple stripe patterns, the predetermined stripe pattern may be projected so that the light-emission start timing or the light-off start timing differs for each stripe number. The stripe number to which the pixel whose stripe pattern is obtained belongs can be specified from the output timing of the first event data. Therefore, it is not necessary to separately project multiple types of the gray code patterns to identify the stripe number to which the pixel whose stripe pattern is obtained belongs. Therefore, the projection time of the gray code pattern, which is the impediment to the acceleration, can be reduced. Therefore, the three-dimensional shape of the object to be measured can be measured using the event data without projecting the gray code pattern to identify the stripe number. It is also possible to specify the stripe number by aligning the end timing instead of the start timing of the light emission (or turning off).

The determination unit of claim 4 determines whether the relative distance change of the object to be measured relative to the imaging unit is greater than or equal to the prescribed distance based on the difference between the previous measurement result and the more past measurement result. When the determination unit determines that the relative distance change is less than the predetermined distance, the projection unit projects the predetermined stripe pattern using the short pulse. The measurement unit obtains information on the stripe pattern based on the number of times the event data is output per pixel in the captured image. Conversely, when the determination unit determines that the relative distance change is equal to or greater than the predetermined distance, the projection unit projects the predetermined stripe pattern using a single pulse. The measuring unit obtains the stripe pattern information based on the time difference between the output of the event data of the positive brightness change and the output of the event data of the negative brightness change for each pixel in the captured image from one to the other.

According to the relative distance change of the object to be measured with respect to the imaging unit, the configuration for obtaining the brightness information based on the number of times the event data is output per unit time can be switched to the configuration for obtaining brightness information based on the time difference between the output of the event data of positive brightness change and the output of the event data of negative brightness change in each pixel of the imaged image.

A brief description of the drawing

Fig. 1 is a block diagram showing the schematic configuration of the three-dimensional measuring device according to the first embodiment.
Fig. 2 is an explanatory diagram illustrating the state in which the predetermined stripe pattern is projected on the object to be measured.
Fig. 3 is an explanatory diagram explaining the relationship between the output-start timing of the event data and the stripe number in the first embodiment, where (A) and (B) show the output state of the event data of the first stripe, (C) show the output state of the event data of the second stripe, and (D) show the output state of the event data of the fifth stripe.
Fig. 4 is a diagram for explaining the dispersion effect of the timing of the emergence of event data according to the present embodiment.
Fig. 5 is an explanatory diagram explaining the relationship between the number of times the event data is output and the stripe number in the third embodiment: (A) and (B) show the output state of the event data of the first stripe, (C) show the output state of the event data of the second stripe, and (D) show the output state of the event data of the fifth stripe.
Fig. 6 is a diagram illustrating the three-dimensional measurement by the phase shift method.
Fig. 7 is a diagram illustrating the sine wave pattern by the phase shift method.
Fig. 8 is a diagram for explaining the creation of the sine wave pattern in the first embodiment.
Fig. 9 is a block diagram showing the stripe pattern in the first embodiment.
Fig. 10 is a block diagram showing the stripe pattern in the second embodiment.
Fig. 11 is a block diagram showing the stripe pattern in the third embodiment.
Fig. 12 shows another example of the stripe pattern.
Fig. 13 shows yet another example of the stripe pattern.
Fig. 14 is a diagram illustrating that identification of the stripe numbers is performed by aligning the output end timing instead of the output start timing in the first embodiment.
Fig. 15 is a diagram illustrating that specification of the stripe number is performed by aligning the output end timing instead of the output start timing in the third embodiment.

Embodiments

First Embodiment

Hereafter, the first embodiment embodying the three-dimensional measuring device of the present disclosure will be described with reference to the drawings.

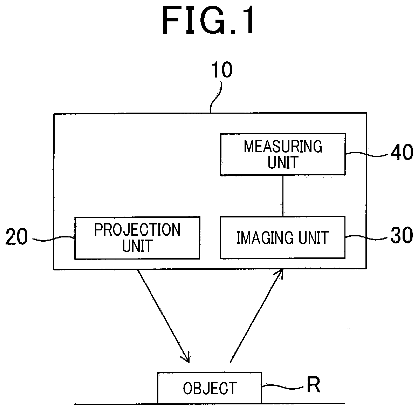

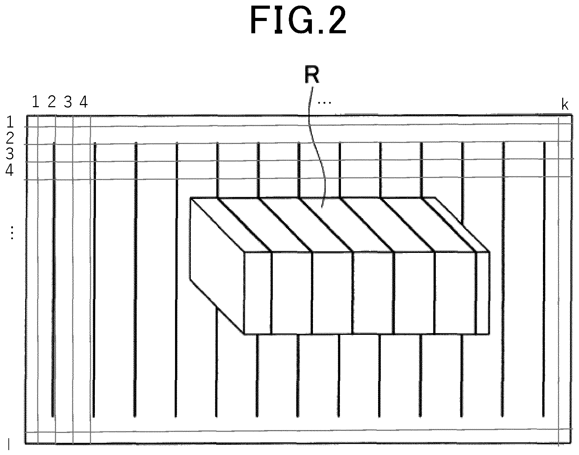

The three-dimensional measuring device 10 according to this embodiment measures the three-dimensional shape of the measuring object R. As shown in Figs. 1 and 2, it is configured to have the following three devices. The projection unit 20 projects the predetermined stripe pattern for the phase shift method to the measurement object R. The imaging unit 30 images the measurement object R projected with the predetermined stripe pattern. The measuring unit 40 measures the three-dimensional shape of the object R to be measured from this captured image. The three-dimensional measuring device 10 thus constructed is, for example, assembled into a robot hand. Thereby, the three-dimensional shape of the object R to be measured, such as a work, which will move relatively to the hand at high speed, is measured. The relative movement refers to the relative movement between the movement of the three-dimensional measuring device 10 attached to the robot's hand and the high-speed movement of the object R. When the three-dimensional measuring device 10 is fixed, the relative movement is the movement of the object R.

Note that, for convenience, the predetermined stripe pattern up to 13 stripes is shown in simplified form in Figure 2. More specifically, the stripe pattern is represented by a sine wave pattern, as described below, so the white and black of the stripe pattern have similar widths. However, in Figure 2, the black part is shown as a line with a smaller width. The number of stripe patterns is also 13 or more in the embodiment, but it is omitted to 13.

The projection unit 20 is a so-called DLP projector, which projects the predetermined stripe pattern described later by reflecting light from a light source by a DMD element. The DMD elements are arrays of microscopic mirrors corresponding to each pixel in an image projected onto a screen. By varying the angle of each mirror, it turns the light coming out of the screen on and off in microseconds. So it varies the light reflected by the ratio of how long each mirror is on to how long it is off. This allows display based on the image data of the image to be projected. In such a configuration, the emission state can be specified according to the emission time of single-pulse emission, which is emitted once within a unit time secured for each emission state.

If the pixels are (1, 1) for the upper left and (k, 1) for the lower right in Fig. 2, a mirror corresponding to k by 1 pixels is provided. For example, k is 1140 and 1 is 912.

Generally, the sine wave pattern identified from the luminance value I (x, y, n) in equation (1) below is adopted as the stripe pattern for the phase shift method. The stripe pattern is a pattern in which the brightness changes periodically in the first direction and does not change in the second direction perpendicular to the first direction.

That is, when the number of phase shifts is N, the luminance value I (x, y, n) of N phase-shifted lattice images (stripe images) is expressed by equation (1).

$$I(x,y,n)=a(x,y)\cos\{\theta(x,y)+2\pi n/N\}+b(x,y) \qquad \cdot\cdot\cdot(1)$$

Here, a point (x, y) is a point in the grid image, a (x, y) is the brightness amplitude of that point, and b (x, y) is the background brightness of that point. $\theta$ (x, y) indicates the phase of the n = 0 lattice. The distance z to the point (x, y) can be measured according to $\theta$ (x, y) obtained from the luminance value I (x, y, n) of N lattice images.

The imaging unit 30 is a so-called event camera. The imaging unit 30 is equipped with the imaging device that outputs event data including the two-dimensional point data in which the position of the pixel is specified corresponding to the pixel whose brightness has changed when it is received. The event data are specifically the two-dimensional point data, time, and polarity of brightness change. The imaging unit 30 is configured to be able to generate an imaged image from the event data output from the imaging device. Therefore, in the imaging unit 30, for each pixel unit in the captured image, the event data of the positive brightness change is output when the brightness change that becomes brighter by receiving light occurs. In the imaging unit 30, when the brightness change that darkens due to the disappearance of the light occurs, the event data of the negative brightness change is output. By plotting the two-dimensional point data of the multiple event data that are output within a certain period as points on a predetermined plane, it is possible to generate the image data that images the object to be measured. The imaging unit 30 outputs the image data or the event data thus generated to the measuring unit 40. The event data is two-dimensional point data, time, and polarity of brightness change. The number of two-dimensional points in the imaging unit 30 and the number of pixels in the projection unit 20 may be the same, or one may be larger than the other. In this example, the number of pixels in the projection unit 20 is larger than the two-dimensional number of pixels in the imaging unit 30. In any case, pixels corresponding to the stripe pattern projected by the projection unit 20 can be identified from the two-dimensional point data of the imaging unit 30.

The measuring unit 40 uses the information of the stripe pattern obtained from the captured image taken by the imaging unit 30 for the measurement object R in the state where the predetermined stripe pattern is projected from the projection unit 20. The measuring unit 40 measures the three-dimensional shape of the measuring object R by the phase shift method using the stripe pattern information. As described above, the measuring unit 40 obtains the luminance value I (x, y, n) at the point (x, y) in the captured image to obtain $\theta$ (x, y). The distance z to the point (x, y) is measured according to $\theta$ (x, y). By measuring the distance z of each point (x, y) of the measurement object R imaged in this way, the three-dimensional shape of the measurement object R can be measured.

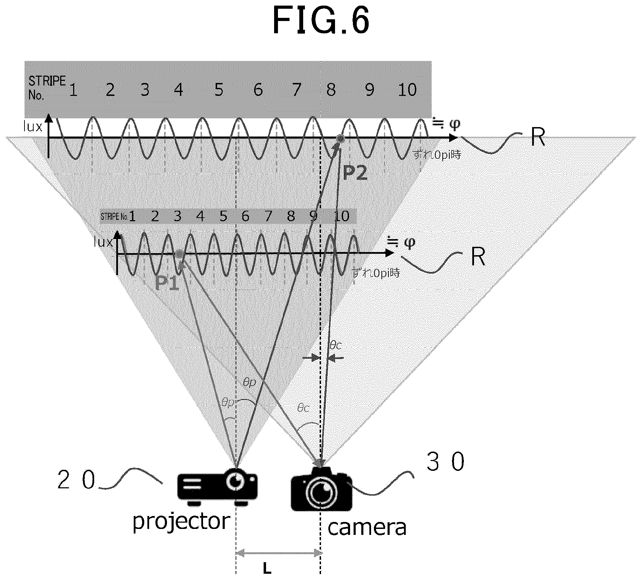

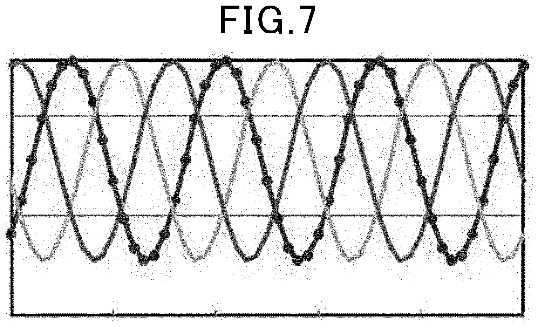

For example, when determining the distances of P1 and P2 in Fig. 6, the sine wave pattern is projected from the projection unit 20 and photographed by the imaging unit 30. From the shot image, the number of P1 and P2 are obtained. From the phase value of that point, the angles $\theta$ p and $\theta$ c of the projection unit 20 and the imaging unit 30 are obtained, respectively. Then, since the parallax L is known, the distance values of the P1 and P2 points are obtained by triangulation. By performing this calculation throughout the measurement area, 3D measurement can be performed. The sine wave pattern is irradiated in phase shifts of 120 degrees as shown in Fig. 7.

The three-dimensional measurement processing performed in the measurement unit 40 when measuring the three-dimensional shape of the measurement object R using the phase shift method is described in detail below.

In this embodiment, the event camera is adopted as the imaging unit 30 for accurately imaging the measuring object R moving relatively at a high speed. In such a configuration, the event data corresponding to the pixels with the brightness changes are output. Because the event data does not include the luminance value, the luminance value I (x, y, n) required for the phase shift method cannot be obtained directly.

On the other hand, after the event data of the positive brightness change is output at the timing of the emission start, the event data of the negative brightness change is output at the timing of the emission end. Therefore, the time difference between the output of the event data of the positive brightness change and the output of the event data of the negative brightness change can be measured. In this embodiment, the stripe pattern corresponding to the sine wave pattern is obtained based on the time difference between the output of the event data of the positive brightness change and the output of the event data of the negative brightness change in the captured image in pixel units.

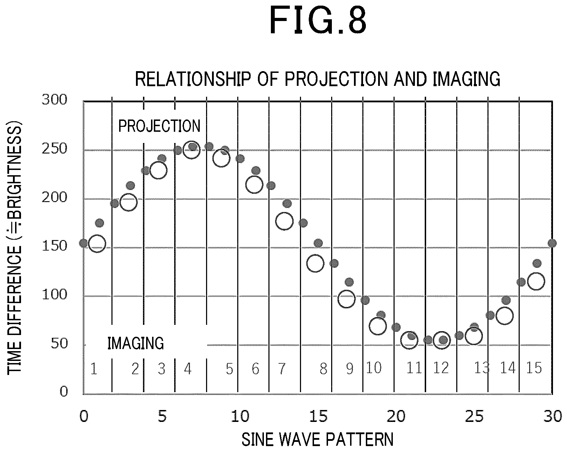

To identify the sine wave patterns, a certain number of specific points are required. In the example of Fig. 8, the projection unit 20 projects the sine wave pattern at 30 points, and the imaging unit 30 photographs the sine wave pattern projected at 15 points. In the example of Fig. 8, the projection unit 20 starts irradiation at time 0 at all 30 points. Therefore, the imaging unit 30 has also started shooting at all 15 points. On the other hand, the time of the end of irradiation of the projection unit 20, that is, the time of the end of photographing in the imaging unit 30, differs for each point so as to correspond to the sine wave pattern.

The first point of the imaging unit 30 and the irradiation of the projection unit 20 is finished in about 150 microseconds, and the second point in about 200 microseconds. Then, the imaging unit 30 and the irradiation of the projection unit 20 is finished in about 50 microseconds at the 11th and 12th points and in about 120 microseconds at the 15th point.

In the example of Fig. 8, each of the 1st to 15th points of the imaging unit 30 corresponds to two pixels of the projection unit 20, but one pixel may correspond to one point. Conversely, if the number of two-dimensional points in the imaging unit 30 is greater than the number of pixels in the projection unit 20, one pixel is photographed at multiple points. In any case, it is sufficient to have as many two-dimensional points in the imaging unit 30 and pixels in the projection unit 20 as the sine wave pattern can be identified.

The example in Figure 8 uses 300 microseconds to identify the single sine wave pattern. It may, however, take a longer time or, conversely, a shorter time to identify the sine wave pattern. As long as the sine wave pattern can be identified in a sufficiently short time compared with the moving speed of the measuring object R.

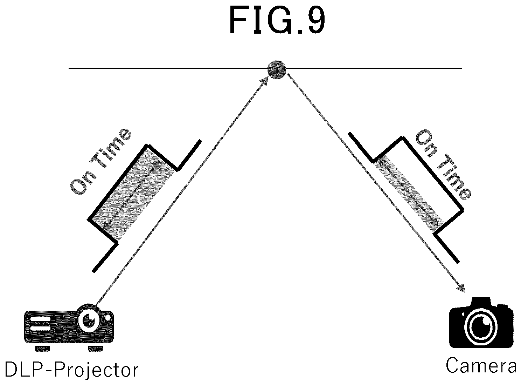

Figure 9 shows the relationship between the projection time of the projection unit 20 and the imaging time of the imaging unit 30. Specific pixels of the projection unit 20 are projected for a predetermined time from the start of projection (time 0), and the irradiation ends after the predetermined time. The imaging unit 30, which photographs the area to which the specific pixel is irradiated, obtains the event information of the brightness change at the same time as the start of irradiation (time 0), and the imaging unit 30 also obtains the event information of the brightness change at the end of irradiation (after the predetermined time). Using the time difference between the event information from the start of irradiation and the end of irradiation, the measuring unit 40 creates the sine wave pattern and measures the distance from the information of the sine wave pattern to the measuring object R.

In this embodiment, the projection unit 20 projects the predetermined stripe pattern to the measurement object R so that the emission start timing differs for each stripe number of the multiple existing stripe patterns. As a result, the image of the measurement object R can be generated at a higher speed. Hereafter, the reason why the image generation of the measurement object R can be accelerated by varying the emission start timing for each stripe number is explained.

It is assumed a case in which the three-dimensional shape of the object to be measured on which multiple stripe patterns are projected is measured by the phase shift method. Generally, the image projected with the gray code pattern for specifying the stripe number is also imaged in order to prevent the deviation of the stripe number in the imaged image. For example, when a stripe pattern is projected onto the measurement object with a concave and convex shape or the object with an opaque area, the position of the projection part and the imaging part may be misaligned. Therefore, the part of the image that should be k-striped may be mistaken for k-1 stripes. Without a mechanism to identify the stripe numbers on a pixel-by-pixel basis, erroneous distance calculations can occur. This problem also occurs when measuring the three-dimensional shape of the object to be measured using the time difference of event data output from an event camera.

In the gray code pattern for stripe number identification, the number of stripes in the stripe pattern increases as the number of stripes increases. For example, stripe pattern of about 50 stripes would require 8 different gray code patterns to be projected and imaged. The projection time, etc., of these multiple types of the gray code patterns is an impediment to the acceleration of measurement processing.

Therefore, in this embodiment, the predetermined stripe pattern is projected so that the emission start timing differs for each stripe number. Thus, the stripe number to which the pixel whose brightness value is obtained belongs can be specified from the output timing of the first event data constituting the above time difference without projecting the gray code pattern for specifying the stripe number.

Specifically, within a unit time, for example, the predetermined stripe pattern is projected such that emission starts for the first stripe at 100 microseconds, for the second stripe at 200 microseconds, and for the k stripe at k x 100 microseconds. By projecting the prescribed stripe pattern in this way, at 100 microseconds, event data is output from the pixels belonging to the 1st stripe. On the other hand, the pixels belonging to the second and subsequent stripes do not output event data.

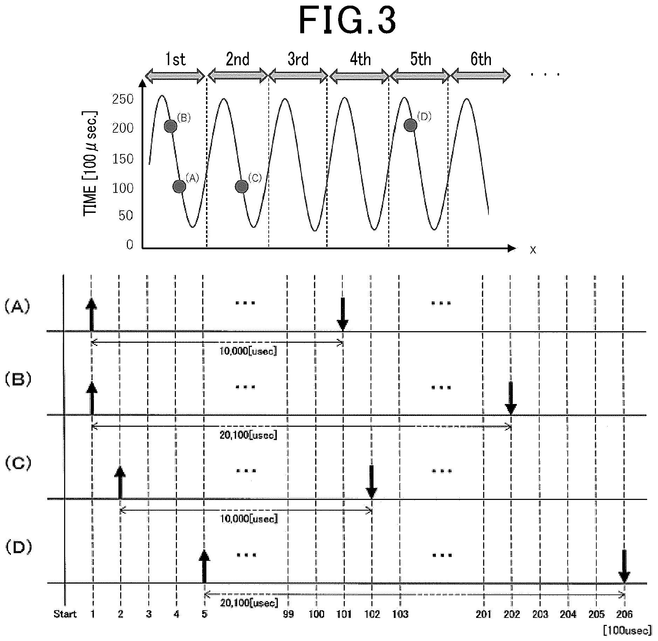

In such the predetermined stripe pattern, for example, the brightness value of 255 is set at the time difference of 25500 microseconds (the brightness value of 1 at the time difference of 100 microseconds). Then, at the pixel with the 1st stripe brightness value of 100, the event data of the positive brightness change and the event data of the negative brightness change as shown in Fig. 3 (A) are output. In the pixel with the 1st stripe the brightness value of 201, the event data of the positive brightness change and the event data of the negative brightness change as shown in Fig. 3 (B) are output. As shown in the example in Fig. 8, a certain number of points is required to identify the sine wave pattern. Therefore, the striped pattern of the first stripe cannot be identified only by the two points in Fig. 3 (A) and Fig. 3 (B). When the sine wave pattern is identified at 15 points, Figures 3 (A) and 3 (B) only illustrate 2 points out of the 15 points: the point 10,000 microseconds after the start and the point 20100 microseconds after the start.

In the pixel with the second stripe brightness value of 100, the event data of the positive brightness change and the event data of the negative brightness change as shown in Fig. 3 (C) are output. In the pixel with the fifth stripe brightness value of 201, the event data of the positive brightness change and the event data of the negative brightness change as shown in Fig. 3 (D) are output. As in the case of Figures 3 (A) and 3 (B), Figure 3 (C) alone does not identify the stripe pattern of the second stripe. Nor can Figure 3 (D) alone identify the striped pattern of the fifth stripes. It actually identifies stripe patterns at more than 15 points. Figure 3 (C) only exemplifies the point 10,000 microseconds after the start of the second stripe of more than 15 points. Also, Figure 3 (D) only exemplifies the point 20100 microseconds after the start of the 5-stripe pattern, out of more than 15 points.

In Fig. 3, the output of the event data of the positive brightness change is illustrated with an upward arrow, and the output of the event data of the negative brightness change is illustrated with a downward arrow.

In the three-dimensional measurement processing performed by the measuring unit 40, the sine wave pattern is obtained from the time difference between the output of the event data of the positive brightness change and the output of the event data of the negative brightness change for the pixel to which the event data as shown in Fig. 3 (A) is output. Based on the obtained sine wave pattern, the distance to the measuring object R is measured. From the output timing of the first event data that makes up each sine wave pattern, it is identified as belonging to the 1st, 2nd, or n-stripes. That is, the difference in the first output timing of two or more sine wave patterns is enough to determine the stripe number.

As described above, in the three-dimensional measuring device 10 according to the present embodiment, the emission time is individually adjusted for each pixel in order to project the predetermined stripe pattern for the phase shift method in the projection unit 20. On the other hand, for each pixel unit in the captured image, the imaging unit 30 outputs the event data of the positive brightness change when the brightness change that becomes brighter by receiving light occurs. When the light disappears, the dimming brightness change occurs and the event data of the negative brightness change is output. That is, the sine wave pattern corresponding to the pixel can be specified according to the time difference between the output of the event data of the positive brightness change and the output of the event data of the negative brightness change.

The predetermined stripe pattern is projected so that the emission start timing differs for each stripe number. Therefore, the stripe number to which the pixel for which the stripe pattern is obtained belongs can be specified from the output timing of the first event data constituting the above time difference. Therefore, it is not necessary to separately project multiple kinds of the gray code patterns to identify the stripe number to which the pixel whose stripe pattern is obtained belongs. Therefore, the projection time of the gray code pattern, which is an impediment to the acceleration, can be reduced. Therefore, it is possible to measure the three-dimensional shape of the measurement obj ect R using the event data without projecting the gray code pattern to identify the stripe number. A case in which the predetermined stripe pattern is projected by utilizing short-pulse emission emitted multiple times within a unit time will be described later. In this case, the brightness value may be determined based on the sum of the time differences between the output of the event data of the positive brightness change and the output of the event data of the negative brightness change that occur repeatedly within the unit time.

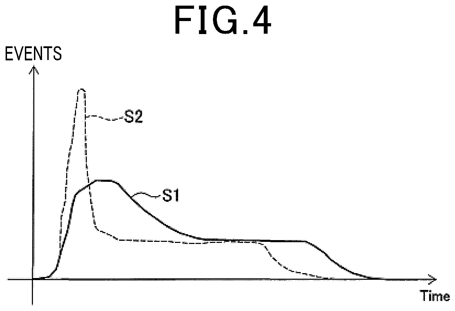

In this embodiment, the predetermined stripe pattern is projected so that the emission start timing differs for each stripe number. Therefore, the output timing of the event data can be distributed. That is, as shown in Fig. 4, the number of events S 1 of the event data output in the present embodiment is greatly reduced immediately after the start of the unit time, compared with the number of events S2 of the event data output so that the emission start timing is the same regardless of the stripe number. Thus, the amount of events output per time can be averaged. Therefore, the delay in the output of the event data and the omission of the event data, which are caused by the concentration of the output timing of the event data, can be suppressed.

The event data identifying the sine wave pattern used for the three-dimensional measurement is output according to the brightness change between the start and the end of irradiation of the projection unit 20. Therefore, it is possible to measure accurately even the measurement of the object whose brightness difference from the background is large, which is difficult to do with the ordinary phase shift method that does not use the event data. The measured objects with a large brightness difference include, for example, a black object on a white desk surface.

The case of projecting the predetermined stripe pattern in which the event data of the negative brightness change is output first and then the event data of the positive brightness change is output is explained. In this case, the brightness value can be obtained from the time difference between both event data, and the stripe number can be identified from the output timing of the event data of the negative brightness change. In the example of Fig. 8, the sine wave pattern was identified by the starting irradiation at time 0 and the ending irradiation at a predetermined time.

Conversely, the sine wave pattern may be specified by terminating the irradiation at time 0 (turning off) and starting the irradiation at a predetermined time (turning off).

The time required to identify the sine wave pattern and the time difference for each stripe number can be set separately. That is, the time required to identify one sine wave pattern may be longer than the time difference for each stripe number. Conversely, the time required to identify one sine wave pattern may be shorter than the time difference for each stripe number.

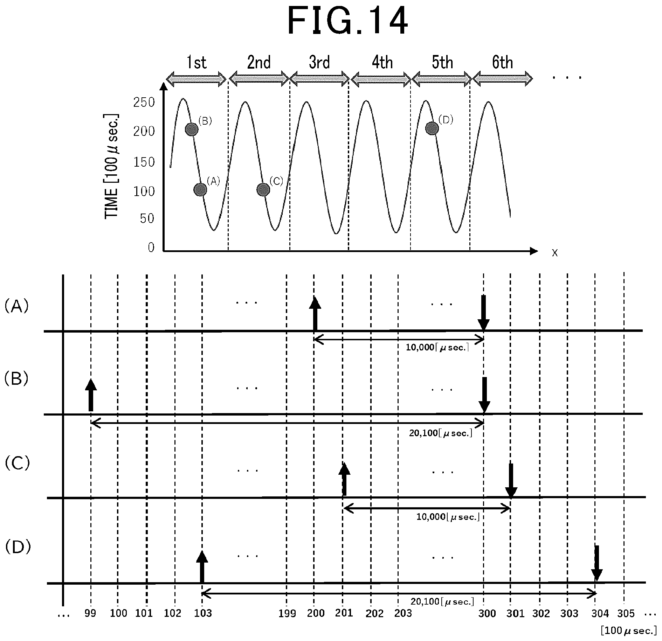

In the example of Fig. 3, the timing of the start of output is shifted for each stripe to identify the number of stripes of the sine wave pattern. This may be done to identify the number of the stripes of the sine wave pattern at the end of the output. As shown in Fig. 14, for example, a 1-stripe sine wave pattern causes all of the multiple points to end after 30,000 microseconds, while a 2-stripe sine wave pattern causes all of the multiple points to end after 30100 microseconds. In this example, the end timing is staggered by 100 microseconds. In this case, the sine wave pattern of the fifth stripe would end after 30400 microseconds for all the points. In Figure 14, only 2 points (stripes 1) or 1 point (stripes 2 and 5) of the multiple points are illustrated. This is the same as the example in Figure 3.

Second Embodiment

The three-dimensional measuring device according to the second embodiment will be described with reference to the drawings.

In this second embodiment, the imaging unit 30 measures the time difference for identifying the sine wave pattern using only either the event data of the positive brightness change or the image data of the negative brightness change.

In the first embodiment described above, as shown in Fig. 9, the projection unit 20 was continuously irradiated (or turned off) from the start of irradiation (time 0) to the end of irradiation (after a predetermined time). It was then turned off (or irradiated) at the end of irradiation. The imaging unit 30 used the event data of the positive brightness change at the start of the irradiation and the event data of the negative brightness change at the end of irradiation.

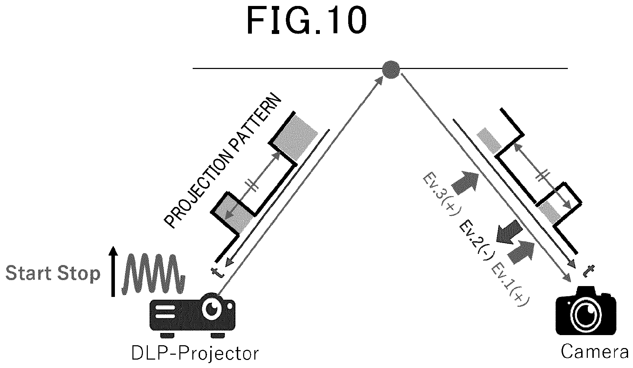

On the other hand, in the second embodiment, as shown in Fig. 10, the projection unit 20 ends the projection immediately after the start of the irradiation (time 0). After a predetermined time, the projection unit 20 starts the irradiation again. The imaging unit 30 outputs the event data of the positive brightness change at time 0. After that, the event data of the positive brightness change of the irradiation start is output again after a predetermined time. Using the time difference between the event data of these two positive brightness changes, the measurement unit 40 identifies the sine wave pattern. It is similar to the first embodiment in that the sine wave pattern is identified using the time difference.

Thus, in the second embodiment, when the imaging unit 30 can sense both the event data of the positive brightness change and the event data of the negative brightness change, the time is measured using only the event data of the positive brightness change. However, conversely, the time may be measured using only the event data of the negative brightness change.

In some cases, the imaging unit 30 can sense only either the event data of the positive brightness change or the event data of the negative brightness change. In that case, the time is measured using the event data of the perceived brightness change. They then try to identify the sine wave patterns rather than the time differences.

(Third Embodiment)

The third embodiment mainly differs from the first and second above embodiments in the following points. The difference is that the projection unit 20 projects the predetermined stripe pattern by utilizing the number of short-pulse emissions emitted multiple times within a unit time. Therefore, the same components as those in the first embodiment are denoted by the same reference numeral and their descriptions are omitted.

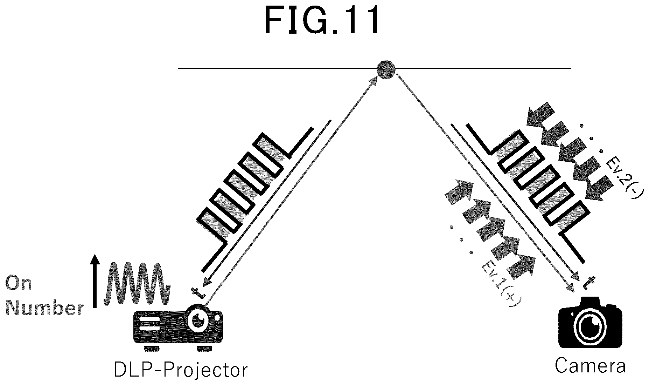

In the third embodiment, the predetermined stripe pattern is projected by utilizing the number of short pulse emissions emitted multiple times within the unit time. This is for the purpose of reducing the power consumption in the projection unit 20. In such a configuration, the sine wave pattern is specified according to the number of emissions of the short pulse emission, as shown in Fig. 11.

In the pixel unit of the imaging device, the event data of the positive brightness change and the event data of the negative brightness change (hereinafter also referred to as a pair of event data) are output in a short time in response to one short pulse emission. Therefore, the sine wave pattern can be obtained based on the number of emission of the short pulse emission, that is, the number of output of the pair of event data.

In the example in Figure 8, the sine wave pattern was identified by the irradiation time from time 0. This is made to emit the light once every 10 microseconds, for example, and to turn off after 1 microsecond. The number of times the light is emitted and turned off corresponds to the emission time in Fig. 8. Corresponding to the example in Figure 8, the first point was irradiated 15 times and the second 20 times. The 11th and 12th points deliver 5 shots, and the 15th point delivers 12. From this number, the sine wave pattern can be identified.

In the example of Fig. 11, the imaging unit 30 can sense both the event data of the positive brightness change and the event data of the negative brightness change. In this case, both the event data of the positive brightness change and the event data of the negative brightness change measure the number of times at each point. However, the number of times at each point may be measured only with either the event data of the positive brightness change or the event data of the negative brightness change.

In some cases, the imaging unit 30 can sense only either the event data of the positive brightness change or the event data of the negative brightness change. In this case, the number of times may be measured using the event data of the perceived brightness change, and the sine wave pattern may be identified according to the number of times measured.

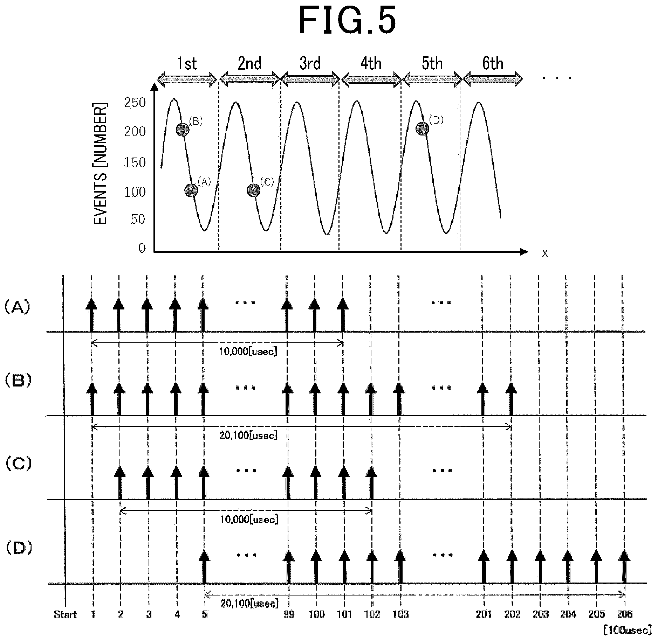

It should be noted that the irradiation start time of the projection unit 20 may be changed according to the multiple stripe numbers in the same way as in the first example. Specifically, for example, the light emission is started for the first stripe at 100 microseconds, for the second stripe at 200 microseconds, and for the k stripe at k x 100 microseconds. In this way, when projecting the predetermined stripe pattern, it is assumed that a case is set to the predetermined value of the sine wave pattern with 100 short pulse emissions. In such a case, for example, a pixel with a luminance value of 100 on the 1st stripe outputs the pair of event data 100 times, as can be seen from Fig. 5 (A). In addition, the pair of event data is output 201 times in a pixel with a luminance value of 201 in the 1st stripe, as can be seen from Fig. 5 (B).

In the second striped pixel with a brightness value of 100, as shown in Fig. 5 (C), the start of the irradiation of the projection unit 20 starts at 200 microseconds, and the pair of event data is output 100 times. In the pixel with the fifth stripe brightness value of 201, as shown in Fig. 5 (D), the start of the irradiation of the projection unit 20 starts from 500 microseconds, and the pair of event data is output 201 times.

Note that, for convenience, only the event data of the plus brightness change among the pair of event data is shown in Fig. 5, and the illustration of the event data of the negative brightness change is omitted. In the example in Fig. 11, the pair of event data is used to measure the number of light emissions. However, as mentioned above, the number of the light emission can be measured only by the event data of the positive brightness change.

In addition, a certain number of points are required to identify one sine wave pattern as in the first example. Therefore, if the sine wave pattern has 15 points, Figure 5 lists only 2 of the 15 points on the 1st stripe and 1 of the 15 points on the 2nd and 5th stripes, omitting the others.

In the three-dimensional measurement processing performed by the measuring unit 40, the sine wave pattern corresponding to the pixel to which the event data as shown in Fig. 5 (A) is output is obtained from the number of times the pair of event data is output. Then, from the output timing of that first event data, it is identified as belonging to the 1st stripe. That is, the value of the sine wave pattern and the stripe number can be obtained as the information of the stripe pattern only by the number of times and the timing of output of the event data.

As mentioned above, it is not limited to determining the brightness value from the number of outputs of the pair of event data. The sine wave pattern may be specified from the number of times the event data of the positive brightness change is output, or the sine wave pattern may be obtained from the number of times the event data of the negative brightness change is output.

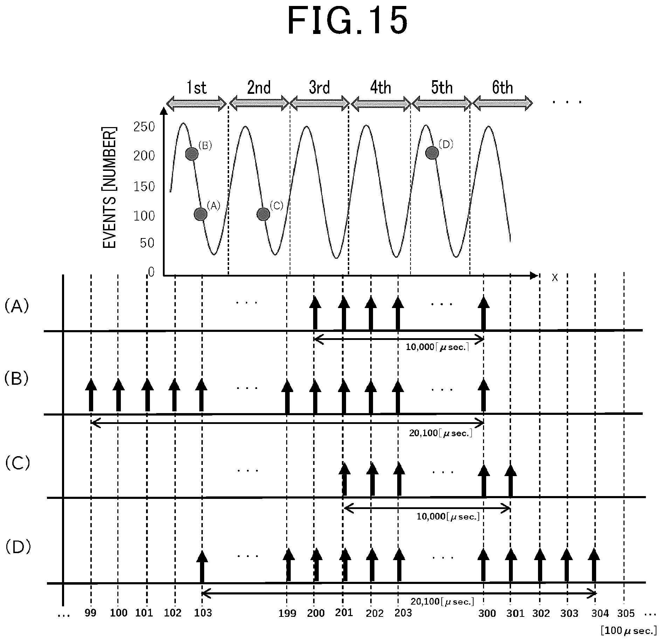

Instead of identifying the number of stripes of the sine wave pattern by shifting the timing of the output start, the number of stripes of the sine wave pattern may be identified at the timing of the output end. This is also the same as in the first embodiment. As shown in Fig. 15, for example, the sine wave pattern of the 1st stripe has all of its multiple points terminated after 30,000 microseconds. The second striped sine wave pattern ends after 30100 microseconds for all of the multiple points. The sine wave pattern with five stripes ends after 30400 microseconds for all points. Figure 15 illustrates only 2 points (stripes 1) or 1 point (stripes 2 and 5) of the multiple points as in the example in Figure 5.

The characteristic configuration of the third embodiment is such that the brightness information is obtained based on the number of times the event data is output per unit time according to the relative distance change of the measuring object R with respect to the imaging unit 30. The characteristic configuration of this third embodiment may be switched with the characteristic configuration of the above first embodiment. The characteristic configuration of the first embodiment is the configuration in which the brightness information is obtained based on the time difference between the output of the event data of the positive brightness change and the output of the event data of the negative brightness change on a pixel-by-pixel basis in the captured image.

Specifically, the projection unit 20 is configured to be able to switch between a state in which the predetermined stripe pattern is projected using the number of short-pulse light emission times emitted multiple times and a state in which the predetermined stripe pattern is projected using the time of single-pulse light emission emitted once. The measuring unit 40 is equipped with a determination unit that determines whether the relative distance change of the measurement object R with respect to the imaging unit 30 is greater than or equal to the first prescribed distance. The determination unit judges whether the distance is more than the first prescribed distance based on the difference between the previous measurement result and the more past measurement result (For example, the results of the last measurement).

When the determination unit of the measuring unit 40 determines that the relative distance change is less than the first predetermined distance, the projection unit 20 projects the predetermined stripe pattern using the short pulse emission. The measuring unit 40 obtains information on the stripe pattern based on the number of times the event data is output in pixel units in the captured image and the stripe number specified from the output timing of the first event data within the unit time.

Conversely, when the determination unit of the measuring unit 40 determines that the relative distance change is equal to or greater than the first predetermined distance, the projection unit 20 projects the predetermined stripe pattern using the single-pulse emission. The measuring unit 40 obtains the information of the stripe pattern based on the time difference between the output of the event data of the positive brightness change and the output of the event data of the negative brightness change on a pixel-by-pixel basis in the captured image and the stripe number specified from the output timing of the first event data constituting this time difference.

When measuring the three-dimensional shape of the object R whose relative distance change is relatively small, that is, the object R whose movement is relatively small, the information on the stripe pattern is obtained based on the number of times the event data is output per unit time. As a result, robustness against the color of the object R to be measured and the influence of ambient light can be enhanced.

Conversely, when measuring the three-dimensional shape of the object R that has a relatively large relative distance change, that is, the object R that has a relatively large movement, the brightness information is obtained based on the time difference between the output of the event data of the positive brightness change and the output of the event data of negative brightness change. As a result, the brightness information can be obtained more quickly than when the brightness information is obtained based on the number of times the event data is output as described above.

The characteristic configuration of this third embodiment may be switched with the characteristic configuration of the above second embodiment. The characteristic configuration of the third embodiment is such that the brightness information is obtained based on the number of times the event data is output per unit time according to the relative distance change of the measuring object R with respect to the imaging unit 30. The characteristic configuration of the second embodiment is the configuration in which the brightness information is obtained based on the time difference between the output of the event data of brightness change, which is the timing of measurement start on a pixel-by-pixel basis, and the output of the event data of the brightness change, which is the timing of measurement end, in an imaged image.

The present invention is not limited to each of the above examples and may be embodied, for example, as follows:

(1) The predetermined stripe pattern is not limited to being projected in such a way that the emission start (lights-out start) timing differs in order from the first stripe mentioned above. They may be projected in the predetermined order of the stripe number so as to vary the timing of the light emission start (light off start). Even in such a case, the stripe number can be specified from the output timing of the event data based on the predetermined stripe number order. Depending on the stripe number, the timing of the emission end (extinguishing) may be aligned instead of the timing of the emission start (extinguishing).

(2) The three-dimensional measuring device 10 is not limited to measuring the three-dimensional shape of the relatively moving measuring object by moving in the state of being attached to the robot hand. For example, it may be used in a fixed state to measure the three-dimensional shape of the measuring object R moving on the conveyance line. As mentioned above, in this case the relative distance change is the velocity of the object R to be measured.

(3) In the three-dimensional the measuring device 10, the projection part 20, the imaging part 30 and the measuring part 40 may be separated. In this case, the measurement unit 40 is configured as the information processing terminal capable of wireless or wired communication with the projection unit 20 and the imaging unit 30.

(4) Instead of starting the irradiation of all the predetermined stripe patterns (e.g., 50 stripe patterns) with the time difference, the irradiation of the projection part 20 may be started simultaneously in multiple sets (For example, two sets of the first stripe pattern, the 25th stripe pattern).

(5) In the above embodiment, the predetermined stripe pattern is projected so that the emission start timing differs for each stripe number. This may be a configuration in which all stripe patterns (For example, 50 stripe patterns) start to be irradiated simultaneously. As shown in Fig. 4, although the number of the events S2 increases, it can be handled when the number of stripe patterns is limited.

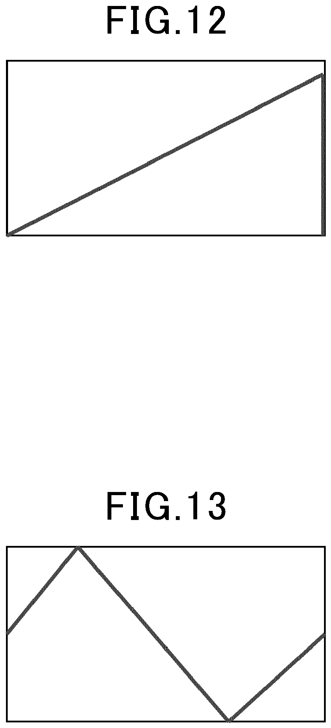

(6) In the example above, the sine wave pattern was used as the stripe pattern. Other shaped stripe patterns are also available. A saw wave, as shown in Figure 12, may also be used. A triangular wave may be used, as in Figure 13.

**Claims**

1. A three-dimensional measuring device comprising

a projection unit that projects a predetermined stripe pattern on an object to be measured,
an imaging unit that images the measuring object on which the predetermined stripe pattern is projected, and
a measuring unit that measures a three-dimensional shape of the measuring object by a phase shift method using a brightness information obtained from a captured image of the imaging unit, wherein
the projection unit projects the predetermined stripe pattern by varying a time from either a light-emission start timing or a light-off start timing to either a light-emission end or a light-off end,
the imaging unit is equipped with an imaging device that outputs an event data including a two-dimensional point data in which a position of a pixel is specified corresponding to the pixel whose brightness has changed when it is received so that a captured image is generated from the event data output from the imaging device,
the imaging device is configured to output the event data of a positive brightness change in a case of the brightness change to brighten and the event data of a negative brightness change in a case of the brightness change to darken, and
the measurement unit obtains the stripe pattern information based on a time difference between the output of one of the event data and the output of the other of the positive brightness change and the negative brightness change in each pixel in the captured image.

2. A three-dimensional measuring device comprising

a projection unit that projects a predetermined stripe pattern on an object to be measured,
an imaging unit that images the measuring object on which the predetermined stripe pattern is projected, and
a measuring unit that measures a three-dimensional shape of the measuring object by a phase shift method using a stripe pattern information obtained from a captured image of the imaging unit; wherein
the projection unit projects a predetermined stripe pattern so that a time from either a start of emission or a start of lights-out, which is a timing of measurement start, to either the start of emission or the start of lights-out, which is the timing of measurement end, is different;
the imaging unit is equipped with an imaging device that outputs an event data including a two-dimensional point data in which a position of a pixel is specified corresponding to the pixel whose brightness has changed when it is received so that a captured image is generated from the event data output from the imaging device;
the imaging device is configured to output at least one of the event data of a positive brightness change in a case of the brightness change becoming brighter and the event data of a negative brightness change in a case of the brightness change becoming darker; and
the measurement unit obtains the stripe pattern information based on a time difference between an output of the event data of either the positive brightness change or the negative brightness change, which is the timing of measurement start on a pixel-by-pixel basis, and the output of the event data of either the positive brightness change or the negative brightness change, which is the timing of measurement end, in the captured image.

3. A three-dimensional measuring device comprising

a projection unit that projects a predetermined stripe pattern on an object to be measured,
an imaging unit that images the measuring object on which a predetermined stripe pattern is projected; and
a measuring unit that measures a three-dimensional shape of the measuring object by a phase shift method using a stripe pattern information obtained from the captured image of the imaging unit; wherein
the projection unit projects the predetermined stripe pattern using short pulse emission,
the imaging unit is equipped with an imaging device that outputs an event data including a two-dimensional point data in which the position of a pixel is specified corresponding to the pixel whose brightness has changed when it is received so that the captured image is generated from the event data output from the imaging device, and
the measurement unit obtains the stripe pattern information on the basis of a number of outputs per unit time of the event data per pixel in the captured image.

4. The three-dimensional measuring device according to claim 3 further includes

a determination unit to determine whether a relative distance change of the measuring object with respect to the imaging unit is a predetermined distance or more based on a difference between a previous measurement result by the measurement unit and a more past measurement result, wherein
the projection unit is configured so as to be able to switch between a state in which the predetermined stripe pattern is projected by utilizing the number of short pulses and a state in which the predetermined stripe pattern is projected by utilizing the time from either the start of emission or the start of lights off of a single pulse to either the end of emission or the end of lights off,

the imaging device is configured to output the event data of the positive brightness change in a case of the brightness change to brighten and the event data of the negative brightness change in a case of the brightness change to darken,

the projection unit uses the short pulse to project the predetermined stripe pattern, and the measurement unit obtains the stripe pattern information based on the number of times the event data is output in pixel units in the captured image when the determination unit determines that the relative distance change is less than the predetermined distance, and

the projection unit projects the predetermined stripe pattern by utilizing the time from either the start of the emission or the start of extinguishment of the single pulse to either the end of the emission or the end of the extinguishment, and the measurement unit obtains the stripe pattern information based on the time difference between one of the outputs of the event data of the positive brightness change and the output of the event data of the negative brightness change in each pixel in the captured image and the other when the relative distance change is determined to be greater than or equal to the predetermined distance by the determination section.

5. The three-dimensional measuring device according to claim 3 further includes

a determination unit to determine whether a relative distance change of the measuring object with respect to the imaging unit is a predetermined distance or more based on a difference between a previous measurement result by the measurement unit and a more past measurement result, wherein

the projection unit is configured so as to be able to switch between a state in which the predetermined stripe pattern is projected by utilizing a number of the short pulses and a state in which the predetermined stripe pattern is projected by varying the time from either the emission start or the extinguishment start, which is the timing of measurement start, to either the emission start or the extinguishment start, which is the timing of measurement end,

the imaging device is configured to output at least either the positive brightness change event data for the brightness change that brightens or the negative brightness change event data for the brightness change that darkens,

the projection unit uses the short pulse to project the prescribed stripe pattern, and the measurement unit obtains the stripe pattern information based on the number of times the event data is output in pixel units in the captured image when the determination unit determines that the relative distance change is less than the prescribed distance, and

the projection unit projects the predetermined stripe pattern by varying the time from the timing of the start of measurement to the timing of the end of measurement, and the measurement unit obtains the stripe pattern information based on the time difference between the timing of starting the measurement by either the output of the positive brightness change event data or the output of the negative brightness change event data on a pixel-by-pixel basis in the captured image and the timing of ending the measurement by either the output of the positive brightness change event data or the output of the negative brightness change event data when the relative distance change is determined to be greater than or equal to the predetermined distance by the determination section.

6. The three-dimensional measuring device according to any of claims 1 to 5,

the stripe pattern is a plurality of stripe patterns with different stripe numbers, and
either the light-emission start timing or the light-off start timing of the projection unit is different from each other in the plurality of stripe patterns.

7. The three-dimensional measuring device according to any of claims 1 to 5,

the stripe pattern is a plurality of stripe patterns with different stripe numbers, and
either the light-emission end timing or the light-off end timing of the projection unit is different from each other in the plurality of stripe patterns.

# FIG.1

10

MEASURING
UNIT ～40

PROJECTION
UNIT ～20

IMAGING UNIT ～30

OBJECT ～R

# FIG.2

# FIG.3

# FIG.4

EVENTS

S2

S1

Time

FIG.5

# FIG.6

# FIG.7

# FIG.8

## RELATIONSHIP OF PROJECTION AND IMAGING

PROJECTION

IMAGING

1 | 2 | 3 | 4 | 5 | 6 | 7 | 8 | 9 | 10 | 11 | 12 | 13 | 14 | 15

TIME DIFFERENCE (≒BRIGHTNESS)

SINE WAVE PATTERN

# FIG.9

# FIG.10

Start Stop

DLP-Projector

Camera

# FIG.11

On
Number

DLP-Projector

Ev.2(-)

Ev.1(+)

Camera

# FIG.12

# FIG.13

# FIG.14

# FIG.15

EP 4 317 912 A1

## INTERNATIONAL SEARCH REPORT

International application No.

**PCT/JP2022/001389**

### A. CLASSIFICATION OF SUBJECT MATTER

*G01B 11/25*(2006.01)i
FI:   G01B11/25 H

According to International Patent Classification (IPC) or to both national classification and IPC

### B. FIELDS SEARCHED

Minimum documentation searched (classification system followed by classification symbols)

G01B11/00-11/30

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| P, X | WO 2021/085419 A1 (DENSO WAVE INC) 06 May 2021 (2021-05-06) <br> claim 2 | 3 |
| P, A | entire text, all drawings | 1-2, 4-7 |
| A | JP 2020-020640 A (DENSO IT LAB INC) 06 February 2020 (2020-02-06) <br> paragraph [0075] | 1-7 |
| A | JP 2014-202540 A (FUJITSU LTD) 27 October 2014 (2014-10-27) <br> paragraph [0045] | 1-7 |
| A | WO 2014/010293 A1 (DENSO CORPORATION) 16 January 2014 (2014-01-16) <br> entire text, all drawings | 1-7 |
| A | EP 2887009 A1 (UNIVERSITAT ZURICH) 24 June 2015 (2015-06-24) <br> whole document | 1-7 |

☐ Further documents are listed in the continuation of Box C.   ☑ See patent family annex.

| | |
|---|---|
| *   Special categories of cited documents: <br> "A"   document defining the general state of the art which is not considered to be of particular relevance <br> "E"   earlier application or patent but published on or after the international filing date <br> "L"   document which may throw doubts on priority claim(s) or which is cited to establish the publication date of another citation or other special reason (as specified) <br> "O"   document referring to an oral disclosure, use, exhibition or other means <br> "P"   document published prior to the international filing date but later than the priority date claimed | "T"   later document published after the international filing date or priority date and not in conflict with the application but cited to understand the principle or theory underlying the invention <br> "X"   document of particular relevance; the claimed invention cannot be considered novel or cannot be considered to involve an inventive step when the document is taken alone <br> "Y"   document of particular relevance; the claimed invention cannot be considered to involve an inventive step when the document is combined with one or more other such documents, such combination being obvious to a person skilled in the art <br> "&"   document member of the same patent family |

| Date of the actual completion of the international search | Date of mailing of the international search report |
|---|---|
| **01 April 2022** | **12 April 2022** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

**INTERNATIONAL SEARCH REPORT**
Information on patent family members

International application No.

**PCT/JP2022/001389**

| Patent document cited in search report | | | Publication date (day/month/year) | Patent family member(s) | | | Publication date (day/month/year) |
|---|---|---|---|---|---|---|---|
| WO | 2021/085419 | A1 | 06 May 2021 | JP 2021-67644 A claim 2 | | | |
| JP | 2020-020640 | A | 06 February 2020 | (Family: none) | | | |
| JP | 2014-202540 | A | 27 October 2014 | US 2014/0294233 A1 paragraph [0050] | | | |
| WO | 2014/010293 | A1 | 16 January 2014 | US 2015/0199817 A1 whole document | | | |
| EP | 2887009 | A1 | 24 June 2015 | US 2017/0003121 A1 whole document WO 2015/097149 A1 | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021056528 A
- JP 3723057 B

- US 20160227135